## Europäisches Patentamt

## European Patent Office

## Office européen des brevets

(19)

(11) Publication number: **0 197 216**
**A2**

# EUROPEAN PATENT APPLICATION

(12)

(21) Application number: **85305422.9**

(22) Date of filing: **30.07.85**

(51) Int. Cl.⁴: **C 01 C 3/10**

(30) Priority: **04.04.85 CA 478511**

(43) Date of publication of application:
**15.10.86 Bulletin 86/42**

(84) Designated Contracting States:
**DE GB IT**

(71) Applicant: **E.I. DU PONT DE NEMOURS AND COMPANY**
**1007 Market Street**
**Wilmington Delaware 19898(US)**

(72) Inventor: **Harrison, Daniel Earl**
**5020 Yale Road No. 2**
**Memphis Tennessee 38128(US)**

(74) Representative: **Barnard, Eric Edward et al,**
**BROOKES & MARTIN High Holborn House 52/54 High**
**Holborn**
**London WC1V 6SE(GB)**

(54) **Sodium cyanide briquetting.**

(57) A process in which durable, dense briquettes are prepared from cyrstalline NaCN particles directly as they emerge from the filtering/drying step; also, a process for producing granular products having no more than 10 percent by weight of –USS No.50 fines by granulating briquettes and air classifying the granules.

# SODIUM CYANIDE BRIQUETTING

This invention relates to a process in which dense, durable briquettes are prepared from fine, crystalline sodium cyanide particles. The production of sodium cyanide by the evaporation of aqeuous solutions of the same is well known. However, the dried product thus obtained is a fine, crystalline material which is difficult to handle due to the irritant and toxic nature of the dust associated with such handling. Various agglomeration techniques are employed in the industry to offset that defect, such as tabletting, pelletizing, or briquetting the crystalline material. In one such technique used to produce a durable briquette from the crystalline material, the material is first compacted into a dense sheet, the sheet is broken into granules and the granules are then briquetted; see U.S. Patent No. 3,615,176.

According to the present invention, there is provided a process in which durable, dense briquettes are prepared from crystalline NaCN particles directly as they emerge from the filtering/drying step. Also, there is provided a process for producing grandular products having no more than 10 percent by weight of -USS No. 50 fines by granulating briquettes and air classifying the granules. The present invention constitutes an improvement over the invention covered by U.S. Patent No. 3,615,716. This invention eliminates the intermediate compacting and granulating steps from the process of the prior art. It thus reduces the costs of manufacturing by improving raw material yields and by reducing waste disposal, maintenance and energy costs.

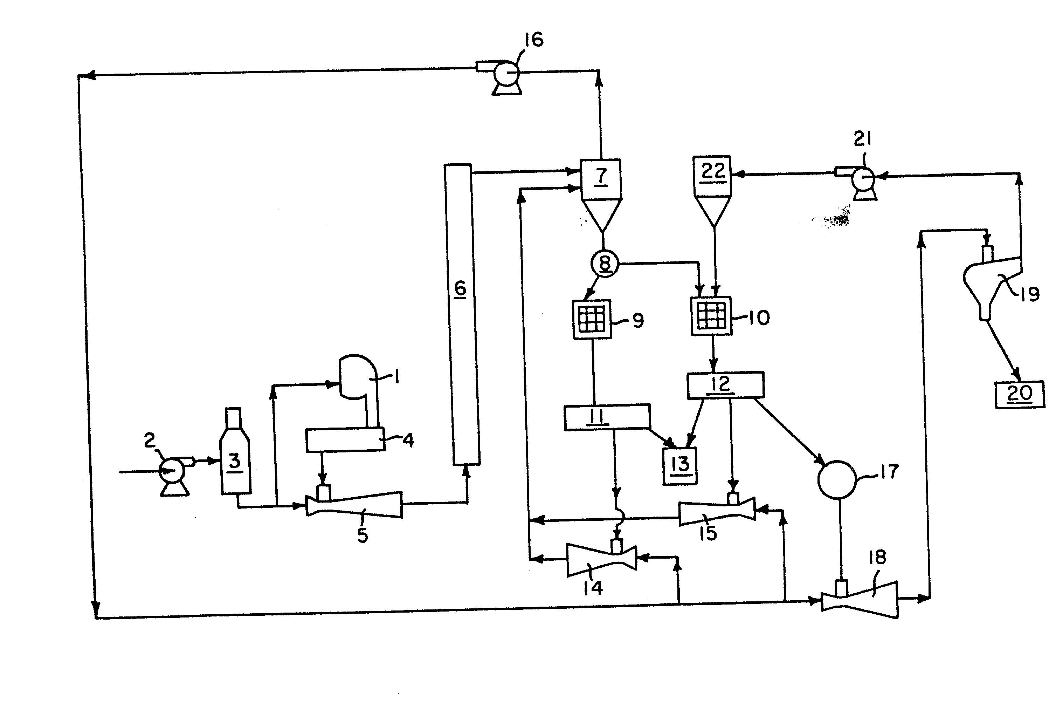

The Figure is a schematic flow diagram of the process of the present invention.

With reference to the Figure, crystalline sodium cyanide, produced by evaporative concentration of an aqueous solution prepared by chemical reaction between hydrogen cyanide and aqueous caustic soda, is separated from the mother liquor by filtration on rotary drum dryer-filter 1. Hot air is supplied to the filter hood by the demister blower 2 through the air heater 3 in the temperature range of 400° to 500°C. The hot air accomplishes some predrying of the filter cake and minimizes drying requirements further along in the process; e.g., the moisture content is reduced sufficiently (below 5 percent by weight) so that continuous feed can be maintained to the air dryer feed venturi 5 without sticking and caking from mixing conveyor 4.

Partially dried sodium cyanide passes through mixing conveyor 4 which subdivides the partially dried cake so that no fragments in excess of two inches maximum dimension remain, and a uniform feed can be maintained to venturi 5. Hot air essentially free of carbon dioxide is introduced into venturi 5 at a temperature within the range of 200° to 350°, preferably 250° to 300°C. The moist sodium cyanide crystals containing 2-5 percent water, but generally about 2 percent water, are pneumatically conveyed and dried adiabatically in dryer-conveyor 6 to an essentially bone-dry state, i.e., a moisture content of less than about 0.05 percent, preferably 0.03 percent by weight. The temperature and proportion of hot air to solids fed to venturi 5 is adjusted so that the dried product discharged from dryer-conveyor 6 is at a temperature within the range of 125° to 175°C. The dried product is discharged into cyclone 7 from which the solids are passed through diverter valve 8 which splits the flow of solids to briquetters 9 and 10.

To accomplish the desired combination of properties, namely uniform density, durability and controlled solution rate of the briquetted product, the temperature of the feed to the briquetters is within the range of 125° to 175°C, the product is briquetted at a pressure of about 15,000 to 25,000 psi (1021 to 1701 atmospheres) and the briquetters are operated at a relatively low roll speed, normally 15 to 20 rpm. Under these conditions, a tough, durable briquette is obtained which is characterized by a high relative density, uniform internal hardness and a high rate of solution. Fracture and crystallographic studies of the internal granular structure indicate that there is a planar surface between granules and the bond between individual granules has become essentially as strong as the cleavage strength of the sodium cyanide crystals themselves. A durable briquette is produced which can be handled in drums, conveyors, etc. without breakage and without dusting.

After briquetting, the briquettes are passed to rotary screeners 11 and 12 in which the "fins," thin layers of material attached to the periphery of the briquette centerline, are removed. The briquettes discharge to product pack bin 13. The "fins" pass through the screen and discharge to venturis 14 and 15 from which they are recycled pneumatically to cyclone 7 and then to briquetters 9 and 10 using air supplied by blower 16.

The briquettes from rotary screener 12 can be diverted to granulator 17 to produce a raw grind having no more than 10-25 percent of the material finer than -USS No. 50, the remainder being granules in the range of -USS No. 4 to +USS No. 50. The granulated sodium cyanide product is fed into the throat of classifier feed venturi 18 and conveyed to classifier 19 by air supplied to venturi 18 from blower 16 that is essentially free of carbon dioxide.

The granulated product is classified in classifier 19 in a hot air stream so that the product from the classifier contains no more than 10 percent by weight of -USS No. 50 fines and preferably less than 5 percent of such material. The granular product flows from classifier 19 to granular product pack bin 20. The fines separated in classifier 19; i.e., the material under USS 50 - mesh are recycled to briquetter 10 through blower 21 and cyclone 22.

0197216

Claims:

1. Process for the production of compacted sodium cyanide briquettes by drying moist sodium cyanide to a fine, crystalline material having a moisture content of below about 0.05 percent by weight and compacting the dried crystalline material, characterized in that immediately following drying, the dried crystalline material is briquetted at a temperature of 125° to 175°C and at a pressure of 15,000 to 25,000 psi.

2. The process of Claim 1 further characterized in that air at a temperature between 400° and 500°C is used for drying the moist sodium cyanide.

3. The process of either Claim 1 or 2 further characterized in that the briquettes are granulated to produce a raw grind having no more than 10-25 percent of the material finer than -USS No. 50 with the remainder being granules in the range of -USS No. 4 to +USS No. 50.

4. The process of Claim 3 further characterized in that the granulated product is classified so that the product contains no more than 10 percent by weight of -USS No. 50 fines and preferably less than 5 percent by weight of such material.